# DEMANDE DE BREVET EUROPEEN

(11) **EP 4 760 565 A1**
(43) Date de publication de la demande: **17.06.2026**
(21) Numéro de dépôt: 25216460.3
(22) Date de dépôt: 17.11.2025
(51) Int. Cl.: G06F 21/55

(54) **PROCÉDÉ DE GESTION AUTOMATISÉE ET SÉCURISÉE DES LOGICIELS SUR UNE PLURALITÉ DE TERMINAUX INFORMATIQUES AVEC SURVEILLANCE ET NOTIFICATIONS EN TEMPS RÉEL**

(30) Priorité: 16.12.2024 FR 2414188
(71) Demandeur: Beamy, 59800 Lille (FR)
(72) Inventeur: JACQUEMIN, Andréa, 59800 LILLE (FR); GAUTHE, Anne, 59800 LILLE (FR); IFTIKHAR, Tahir, 59800 LILLE (FR); ROVERI, Lucas, 59800 LILLE (FR); EMERY, Julien, 59800 LILLE (FR)
(74) Mandataire: IP Trust

(57) **Abrégé**

La présente invention concerne un procédé de gestion des logiciels sur des terminaux informatiques (ordinateurs, mobiles, tablettes) utilisés par une communauté d'une entité avec des politiques de sécurité. Chaque terminal intègre un module de collecte qui surveille en temps réel les interactions des utilisateurs avec diverses applications. Le processus inclut l'enregistrement des références d'utilisation, l'identification des applications utilisées et la collecte des données associées. Ces données sont analysées pour identifier les applications en temps réel et détecter les anomalies par rapport aux usages normaux. En cas de comportement anormal ou pour optimiser l'utilisation des logiciels, des notifications personnalisées sont générées en temps réel. Ces notifications peuvent être envoyées directement aux terminaux via des messages électroniques ou intégrées à l'interface utilisateur. Ce procédé vise une gouvernance centralisée, proactive et automatisée pour renforcer la conformité, la sécurité et l'efficacité des applications utilisées dans une organisation.

## Description

### Domaine de l'invention

La présente invention concerne le domaine de l'automatisation de la gestion des utilisations de logiciels en tant que service (en anglais « software as a service » communément utilisé par son acronyme « Saas ») dans un parc informatique comptant de nombreux utilisateurs ayant des usages disparates et hétérogènes.

Les logiciels en tant que service SaaS est un modèle de distribution de logiciels où les applications sont accessibles en ligne, hébergées dans le cloud, et offertes via un abonnement. Ce modèle est devenu populaire en raison de sa flexibilité, de ses coûts réduits, et de son accessibilité universelle. Toutefois, il présente aussi des défis en termes de sécurité, de dépendance à Internet et de personnalisation limitée, qui doivent être soigneusement gérés par les entreprises qui adoptent cette approche.

En 2023, le marché global du SaaS est valorisé à 273,55 milliards de dollars. En 2032, le marché du SaaS pourrait atteindre 1228,87 milliards de valorisation. Le développement du marché du Saas est dynamisé par la transformation digitale des entreprises en quête d'efficacité opérationnelle, d'une expérience client enrichie, d'innovation et de distinction par rapport à la concurrence sans devoir consentir à des investissements massifs dans des infrastructures lourdes et onéreuses. Le développement du télétravail contribue aussi à l'accélération du recours aux solutions Saas.

Les principales applications actuelles de ce modèle sont le gestionnaire de relation client (CRM), les solutions de création de site commerce en ligne, la visioconférence, la gestion des ressources humaines, les communications unifiées et la messagerie et les logiciels collaboratifs, la gestion des achats, la gestion électronique de documents (GED)... Le SaaS permet aux entreprises d'externaliser intégralement un aspect de leur système d'information (messagerie, sécurité...) et de l'assimiler à un coût de fonctionnement plutôt qu'à un investissement.

Il existe toutefois une offre assez large de solutions Saas présentant des fonctionnalités identiques ou très voisines, et chaque utilisateur sera tenté d'utiliser le SaaS dont il a l'habitude ou à une connaissance, créant une forte disparité dans les structures comptant un nombre important d'usagers.

L'utilisation hétérogène de SaaS par différents utilisateurs au sein d'une même société peut entraîner plusieurs inconvénients majeurs qui affectent à la fois la gestion, la sécurité, et l'efficacité globale de l'organisation.

Si chaque département ou utilisateur adopte des solutions SaaS sans coordination centralisée, il y a un risque d'utiliser plusieurs applications qui offrent des fonctionnalités similaires (par exemple, plusieurs outils de gestion de projet, de communication ou de CRM). Cela conduit à une redondance des applications, augmentant les coûts et compliquant la gestion. L'hétérogénéité des SaaS rend également difficile le suivi des licences utilisées, ce qui peut entraîner des paiements pour des abonnements inutilisés ou sous-utilisés. Cela peut aussi poser des problèmes lorsqu'il s'agit de négocier des tarifs de groupe avec les fournisseurs.

Lorsque chaque utilisateur ou département adopte ses propres solutions SaaS, il devient difficile pour les équipes IT de centraliser la gestion des applications. Cela conduit à une faible visibilité sur quelles applications sont utilisées, combien de licences sont nécessaires, et qui en a l'accès. D'autant plus que chaque SaaS a ses propres conditions contractuelles, méthodes de paiement et cycle de facturation. Une utilisation hétérogène peut conduire à une multiplication des contrats à gérer, rendant la négociation et la gestion des renouvellements beaucoup plus complexes.

L'utilisation « anarchique » conduit aussi à l'utilisation d'applications non validées par l'IT : Si les utilisateurs adoptent des SaaS sans passer par le service IT ou la conformité de l'entreprise, certaines de ces applications pourraient ne pas respecter les politiques de sécurité internes. Cela inclut des faiblesses dans les systèmes d'authentification, le manque de chiffrement, ou des pratiques douteuses en matière de protection des données. L'IT ne peut pas surveiller, sécuriser ou gérer les applications qui ne sont pas officiellement reconnues. Cela expose l'entreprise à des risques d'infiltration de logiciels malveillants, de fuites de données, ou de violations de conformité. Et il est connu qu'une faille même mineure peut mettre en péril l'ensemble de la sécurité informatique.

Par ailleurs, l'utilisation de SaaS qui ne respectent pas les réglementations (par exemple, RGPD, HIPAA) peut exposer l'entreprise à des sanctions légales ou des amendes, en particulier si les données sensibles sont traitées ou stockées sur des plateformes non conformes. Ces risques augmentent avec le développement de l'intelligence artificielle.

D'autres problèmes opérationnels résultent d'une utilisation hétérogène de Saas. Elles peuvent ne pas s'intégrer facilement entre elles, ce qui complique la collaboration entre départements. Par exemple, si une équipe utilise un outil de gestion de projet SaaS tandis qu'une autre utilise un autre logiciel, il peut être difficile de synchroniser les informations ou de faciliter les échanges de données. Une adoption non coordonnée des SaaS conduit à une dispersion des données dans plusieurs systèmes. Cette fragmentation rend difficile la création d'une vue unifiée des informations, ce qui limite la capacité à analyser les données globalement ou à prendre des décisions basées sur des insights clairs.

Enfin, chaque SaaS ayant ses propres interfaces, workflows et fonctionnalités, les utilisateurs doivent s'adapter à plusieurs environnements. Cela peut entraîner une perte de productivité, car les employés passent du temps à apprendre et à jongler entre différents outils. L'utilisation d'applications différentes pour des tâches similaires peut entraîner une incohérence dans les processus internes. Par exemple, deux départements qui utilisent des outils différents pour gérer les relations avec les clients pourraient avoir des approches différentes, ce qui complique la normalisation des procédures et des résultats. Si plusieurs SaaS sont utilisés dans l'entreprise, l'équipe IT doit fournir un support technique pour chaque outil, ce qui complexifie leur travail et dilue leurs efforts. Chaque fournisseur SaaS peut avoir ses propres exigences de support, augmentant les délais de résolution des problèmes.

### Conclusion

En conclusion, l'utilisation hétérogène de SaaS par différents utilisateurs au sein d'une entreprise peut générer plusieurs inconvénients majeurs, notamment une gestion inefficace des ressources, des risques accrus en matière de sécurité, une fragmentation des données, et une perte d'efficacité opérationnelle. Pour surmonter ces défis, il est crucial que les entreprises mettent en place des stratégies de gouvernance des SaaS, centralisent la gestion des applications, et établissent des politiques IT strictes pour encadrer l'adoption et l'utilisation des services SaaS. Cela garantit une meilleure cohérence, plus de sécurité, et une optimisation des coûts.

Pour gérer efficacement les SaaS utilisés par un grand nombre d'utilisateurs dans une entreprise et éviter une hétérogénéité excessive, il est usuel de mettre en place une gouvernance centralisée et des processus de gestion clairs. Cela inclut la sélection, l'adoption, la gestion des licences et la sécurisation des applications SaaS.

Toutefois, cela demande des ressources humaines importantes pour accompagner tous les utilisateurs « en temps réel », avant qu'ils ne commencent à utiliser des applications déviantes, et peut créer une rigidité excessive du fonctionnement de la structure, car les processus de demande d'autorisation, de vérification, de justification, etc peuvent devenir rédhibitoire par rapport à la réactivité attendus par les opérationnels. Une centralisation technocratique s'avère généralement inadaptée, couteuse, et conduit les utilisateurs à contourner la politique interne pour ne pas être freinés dans leur dynamique.

Il est donc apparu nécessaire d'automatiser en partie la gestion de l'utilisation de Saas.

### Etat de la technique

On connaît dans l'état de la technique la demande de brevet WO2024118245 qui décrit un procédé mis en œuvre dans une plate-forme de gestion (SMP) Software as a Service (SaaS), le SMP mis en œuvre dans une ressource cloud comportant au moins un processeur et au moins un dispositif de stockage, le procédé comprenant les étapes suivantes ;
- la réception, sur un réseau, de données de ressources humaines (RH) d'une application RH, lesdites données RH décrivant un organigramme des employés d'un client du SMP ;
- l'identification d'une pluralité d'applications SaaS utilisées par le client du SMP ;
- la réception, sur le réseau, d'une requête d'un appareil client associé à un employé donné du client et la réponse à la demande, puis l'identification d'un groupe de direction au sein de l'organigramme dont l'employé donné est membre,
- l'identification d'une des applications SaaS utilisées par le groupe de direction identifié, et faire apparaître celles identifiées des applications SaaS dans une interface utilisateur rendue par l'appareil client en tant qu'applications recommandées pour l'employé donné du client.

### Inconvénients de l'art antérieur

La solution proposée par la demande WO2024118245 de l'art antérieur permet d'automatiser partiellement la gestion des SaaS dans une organisation comptant un grand nombre d'utilisateurs, mais présente l'inconvénient d'être très figée et contraignante pour les utilisateurs, qui sont limités aux SaaS prévus pour le groupe de personnes dont ils font partie hiérarchiquement, et empêche a priori toute transgression.

### Solution apportée par l'invention

Afin de remédier à ces inconvénients, la présente invention concerne un procédé de gestion des logiciels utilisées sur une pluralité de terminaux informatiques (postes informatiques, mobiles, tablettes) utilisés par une communauté d'utilisateurs appartenant à une entité appliquant des politiques de sécurité, chacun des terminaux informatiques comportant un moyen d'authentification de l'utilisateur, caractérisé en ce qu'il comprend les étapes suivantes :
- Installation sur chacun desdits terminaux informatiques, d'un module de collecte de données configurés pour surveiller en temps réel, les interactions des utilisateurs avec une pluralité d'applications SaaS
- Enregistrement de références d'utilisation desdites applications dans une base de connaissances
- Collecte de données comprenant la capture de données d'utilisation des applications, comportant l'identification des applications utilisés
- Analyse desdits données collectées via un moteur d'analyse de données pour :
   ∘ réaliser en temps réel l'identification des applications utilisées par chacun des utilisateurs,
   ∘ détecter des anomalies par rapport aux références d'utilisation des applications,
- Génération de notifications en temps réel selon les usages applicatifs, configuré pour envoyer des messages électroniques personnalisés auxdits postes informatiques (à travers le navigateur internet ou sur le bureau) ou mobiles et tablettes des utilisateurs, ladite notification se déclenchant en cas de comportements anormaux ou pour optimiser l'utilisation des applications,
- ladite notification commandant le masquage d'une partie de la zone d'affichage de l'interface graphique correspondant à l'application ayant occasionné ladite génération de notification.

Selon des variantes :
lesdites données comprennent une partie au moins des évènements constitués par des métriques de clics, des durées de sessions, des saisies de données et des interactions avec des fonctionnalités spécifiques des applications SaaS.

Le procédé comporte une étape préliminaire de configuration d'un lac de données pour stocker lesdites données collectées sur lesdits terminaux informatiques.

Les données stockées dans ledit lac de données sont chiffrées au repos et en transit pour garantir la sécurité et la confidentialité des informations collectées.

Ledit module de collecte de données un moyen d'analyse de données est une API

Ladite étape d'analyse de données collectée est réalisée par un moteur d'analyse exécutant les traitements pour :
- réaliser des analyses comportementales sur l'utilisation des applications SaaS par les utilisateurs,
- identifier des applications redondantes ou sous-utilisées,
- détecter des anomalies dans l'utilisation des applications SaaS, et
- comparer les performances des applications SaaS à des benchmarks externes ;

Ledit moteur d'analyse de données est configuré pour exécuter des algorithmes d'apprentissage automatique pour identifier des schémas d'utilisation, des comportements utilisateur inhabituels, ou des vulnérabilités dans les applications SaaS.

Ledit moteur d'analyse de données est configuré pour exécuter des analyses comparatives entre les performances d'applications SaaS similaires utilisées dans l'entreprise et dans d'autres organisations, afin de fournir des benchmarks sectoriels.

Lesdites données collectées sur lesdits terminaux informatiques sont enregistrées dans un lac de données.

ledit lac de données est configuré pour organiser les données en plusieurs zones, comprenant :
- une zone pour le stockage brut des données collectées,
- une zone pour le stockage des données après nettoyage et transformation,
- une zone pour le stockage des données prêtes à être analysées.

Ledit système de notification est configuré pour envoyer des notifications contextuelles en fonction de règles prédéfinies, telles que l'utilisation prolongée d'une application SaaS, une violation de politique de sécurité ou l'adoption insuffisante d'une nouvelle application.

Ledit moteur d'analyse de données est configuré pour exécuter des analyses comparatives entre les performances d'applications SaaS similaires utilisées dans l'entreprise et dans d'autres organisations, afin de fournir des benchmarks sectoriels.

### Description détaillée d'un exemple non limitatif de réalisation

La présente invention sera mieux comprise à la lecture de la description qui suit, concernant un exemple non limitatif de réalisation illustré par les dessins annexés où :
[FIG. 1] la figure [FIG. 1] représente le schéma holistique d'un exemple de réalisation de l'invention
[FIG. 2] la figure [FIG. 2] représente le schéma fonctionnel des modules de collecte des données utilisateurs installés sur le terminal de chaque utilisateur
[FIG. 3] la figure [FIG. 3] représente la vue schématique d'un message numérique de notifications en temps réel

### Principe général de l'invention

L'objectif de l'invention est :
- l'identification automatique, de manière exhaustive, des usages sur des logiciels (SaaS, homemade, logiciel sur site)
- la catégorisation les applications de manière automatique par domaines fonctionnels (e.g., Ventes, Marketing, IA) sur différents niveaux (1000+ fonctionnalités couvertes)
- l'automatisation de la définition les politiques de l'entreprise sur les applications d'un même groupement: standard, toléré, interdit
- l'automatisation de l'envoi des notifications en temps réel aux employés pour communiquer les politiques de l'entreprise, et rediriger les usages vers les applications standards réside dans l'automatisation d'une gestion centralisée, sécurisée et optimisée des applications, notamment des logiciels installés sur le terminal, les logiciels internes exécutés à partir du cloud, et/ou les applications SaaS (Software-as-a-Service) au sein d'une entreprise, par l'identification automatique des applications redondantes ou sous-utilisées, et comparer l'usage réel des solutions avec les attentes, pour rediriger les usages vers un sous-ensemble restreint d'applications, en fonction des politiques de l'entreprise.

On entendra par "gestion des applications" au sens du présent brevet la modification conditionnelle de l'affichage de la page sur laquelle l'application est utilisée de façon à provoquer un masquage partiel obligeant l'utilisateur à prendre connaissance d'une information liée à la nature de l'application ; cela permet de manière flexible et douce de respecter la gouvernance de la sécurité informatique sans bloquer de manière brutale l'usage de l'application.

On entendra par " terminal informatique" au sens du présent brevet un équipement informatique permettant d'exécuter une application logicielle notamment un navigateur, notamment un ordinateur, une tablette, un téléphone intelligent ("smartphone").
La gestion selon l'invention se fait notamment en :
- Identifiant de manière exhaustive les usages sur des logiciels (SaaS, homemade logiciel sur site)
- Différenciant les simples visites "vitrines", des utilisations avérées d'applications, grâce à des algorithmes prenant en compte différents points de données permettant notamment de comprendre la typologie de la page visitée et du comportement utilisateur
- Catégorisant les applications de manière automatique par domaines fonctionnels (e.g., Sales, Marketing, IA) sur différents niveaux (1000+ fonctionnalités couvertes)
- Définissant automatiquement les politiques de l'entreprise sur les applications d'un même groupement : standard, toléré, interdit
- Envoyant des notifications, en temps réel sur l'onglet actif de l'usage applicatif, aux employés pour communiquer les politiques de l'entreprise, et les rediriger usages vers les applications standards de l'entreprise

Dans la description qui suit, nous considérons plus particulièrement les applications SaaS, sans toutefois limiter l'invention à la gestion d'applications SaaS.

Bien entendu l'invention s'applique également aux applications installées sur le terminal de l'utilisateur, aux applications exécutées à partir du cloud.

L'invention fournit une solution technique qui permet de mieux maîtriser l'écosystème SaaS de l'entreprise, avec un focus sur l'efficacité opérationnelle, la réduction des risques et l'amélioration continue de l'expérience utilisateur et de la gouvernance, sans bloquer a priori les utilisateurs dans l'utilisation de SaaS, et en automatisant l'échange de messages pour inciter les utilisateurs à harmoniser les SaaS au sein de l'entreprise, avec discernement, et pour recueillir automatiquement les informations pertinentes susceptibles de déroger à une harmonisation absolue.

Selon une implémentation non limitative, le procédé de gestion des logiciels en tant que services utilisés sur une pluralité de terminaux informatiques comportant chacun un navigateur comportant un moyen d'authentification de l'utilisateur, selon l'invention, comprend les étapes suivantes :
- Installation sur chacun desdits terminaux informatiques, d'un module de collecte de données configurés pour surveiller en temps réel, les interactions des utilisateurs avec une pluralité d'applications SaaS
- ladite collecte de données comprenant la capture de données d'utilisation des applications, et l'identification des Saas utilisés
- exécuter un moyen d'analyse de données, configuré pour enregistrer des références d'utilisation desdites applications SaaS identifiées et pour traiter les données collectées en vue de :
   ∘ réaliser des analyses de l'identifiant de la ou des applications SaaS par les utilisateurs,
   ∘ détecter des anomalies par rapport aux référence dans l'utilisation des applications SaaS,
- générer des notifications en temps réel et à l'endroit de l'usage, configuré pour envoyer des messages électroniques personnalisés auxdits terminaux informatiques des utilisateurs en fonction des résultats des analyses, ladite notification se déclenchant en cas de comportements anormaux ou pour optimiser l'utilisation des applications.
- S'assurer que le message notifié obstrue une partie de l'écran où se situe l'usage de l'utilisateur, sans toutefois empêcher, ou bloquer cet usage pendant la superposition de l'écran de masquage. L'objectif étant d'inciter à prendre connaissance du message, à interagir avec la notification ou la faire potentiellement disparaître à la suite d'un ensemble d'action de l'utilisateur. A cet effet, l'extension navigateur détermine l'onglet actif de l'application considérée et génère un message s'affichant dans une zone définie dans le même onglet actif, en superposition graphique de la fenêtre d'affichage de cette application considérée de manière rémanente, sans possibilité pour l'utilisateur de supprimer cet affichage autrement que par des actions prévues.

### Description d'un exemple d'architecture matérielle

L'architecture matérielle de l'invention repose sur la gestion et l'analyse d'applications SaaS à grande échelle. Elle implique une infrastructure cloud distribuée et évolutive. Cette architecture doit répondre à des exigences de performance, de sécurité, de disponibilité et de scalabilité. Les principaux composants matériels et leur organisation sont une infrastructure en nuage. Les ressources informatiques spécifiques à l'invention sont hébergées sur une infrastructure en nuage.

Elle comprend plusieurs serveurs de calcul:
o Un ou plusieurs serveurs d'application (10) : Ce sont les serveurs qui hébergent le code métier l'invention. Ils exécutent les algorithmes d'analyse de données, la gestion des utilisateurs, la logique métier, etc. Ces serveurs peuvent être organisés sous forme de microservices pour améliorer la modularité, la flexibilité et la résilience du système.
o Un ou plusieurs serveurs d'API (20) : Les APIs fournissent des interfaces entre les applications SaaS gérées et la couche logicielle dorsale accédant à des données (en anglais « backend »), permettant d'interagir avec les bases de données, de recueillir des données sur les applications utilisées, et de coordonner les notifications en temps réel. Un même équipement informatique peut assurer les fonctions de serveur d'application et de serveur d'API.
o Un ou plusieurs serveurs de calcul intensif (30) pour exécute des algorithmes complexes d'apprentissage supervisé ou d'apprentissage profond (en anglais « machine learning ou de deep learning »), ou encore de Modèles de Langage de Grande Taille (en anglais "Large Language Models") pour analyser les données utilisateurs, des serveurs dotés de GPUs (unités de traitement graphique) peuvent être utilisés pour accélérer les traitements.

Le stockage de données est assuré par un ou plusieurs lacs de données (en anglais « Data Lakes ») pour stocker les volumes massifs de données collectés sur l'utilisation des applications SaaS (comportement des utilisateurs, sécurité, conformité, etc.). Les lacs de données sont des systèmes de stockage distribués qui peuvent gérer de grandes quantités de données structurées et non structurées.

Le stockage de données fait également recours à des bases de données NoSQL^{™} et SQL^{™}. Les données qui doivent être stockées dans un format structuré, comme les informations sur les utilisateurs, les rôles, les permissions, les configurations, peuvent être gérées via des bases de données relationnelles comme PostgreSQL^{™} ou MySQL^{™}. Pour des volumes de données non structurées plus élevés (logs, événements), des bases NoSQL^{™} comme MongoDB^{™} ou Cassandra^{™} peuvent être utilisées.

L'architecture matériel comprend aussi un ou plusieurs services de sauvegarde : Pour garantir la résilience et la disponibilité des données, des services de sauvegarde distribués et géo-répliqués sont mis en place. Ils assurent que les données soient toujours disponibles même en cas de panne matérielle ou de sinistre.

Le réseau comprend des équilibrages de charge (50) mis en place pour distribuer les requêtes des utilisateurs sur plusieurs serveurs et assurer une disponibilité et une réponse rapide des services. Cela permet d'éviter les surcharges sur un seul serveur en répartissant intelligemment le trafic. Il comprend aussi de manière usuelle un ou plusieurs réseaux (en anglais « Virtual Private Networks (VPNs) » et de barrières (en anglais « Firewalls ») pour assurer la sécurité des données des entreprises clientes. Cela inclut des solutions comme les VPN pour isoler les segments sensibles du réseau, ainsi que des pares-feux et des systèmes de détection d'intrusion pour filtrer le trafic malveillant.

La collecte et l'analyse locale des données est assurée par des extensions Navigateurs installées sur chacun des terminaux informatiques des utilisateurs. Ils assurent la capacité à collecter des données en temps réel via des extensions de navigateur. Ces extensions envoient des données de comportement utilisateur (métriques de clics, temps passé, saisie de données, etc.) vers la couche de logicielle dorsal « backend », nécessitant une faible latence et un chiffrement des données pour des raisons de sécurité.

Les métriques de clics se réfèrent aux données quantitatives mesurant le nombre et le comportement des clics effectués par les utilisateurs sur une interface numérique. Ces métriques peuvent inclure des indicateurs tels que :
- Nombre total de clics : le total des clics enregistrés sur une période donnée.
- Taux de clics (CTR) : le rapport entre le nombre de clics et le nombre d'impressions ou d'affichages d'un élément interactif.
- Clics uniques : le nombre de visiteurs distincts ayant cliqué sur un élément.
- Clics par source : la répartition des clics selon les différentes sources de trafic (par exemple, recherche organique, réseaux sociaux, e-mails).

Ces métriques permettent d'analyser l'engagement des utilisateurs et l'efficacité des interfaces utilisateur.

Ces données sont collectées via des services de suivi (en anglais « tracking ») en temps réel qui nécessitent des serveurs de faible latence pour analyser et répondre aux événements utilisateur.

Un ou plusieurs serveurs de notification (60) envoient des notifications aux utilisateurs via leurs navigateurs à des moments précis, par exemple après 15 minutes d'utilisation ou en cas de comportement anormal. Cela nécessite des serveurs de push notification capables d'interagir avec les utilisateurs en temps réel.

L'architecture comprend aussi des tableaux de bords (70) interactifs qui agrègent les données et permettent de générer des rapports en temps réel. Ces tableaux de bords sont hébergés sur des serveurs web dédiés et utilisent des technologies pour offrir une interface utilisateur fluide.

### Architecture fonctionnelle

L'architecture fonctionnelle de l'invention peut être décrite comme un ensemble de composants et de services interconnectés, chacun jouant un rôle spécifique pour offrir une gestion optimisée des applications SaaS au sein d'une entreprise. Cette architecture repose sur des modules dédiés à la collecte, l'analyse, la sécurité, la gouvernance et l'interaction utilisateur. Cette architecture fonctionnelle comprend :

### 1. un module (200) de collecte des données utilisateur (Tracking et Monitoring)

Ce module (200) est chargé de capturer les interactions des utilisateurs avec les applications SaaS utilisées dans l'entreprise. Il est installé sur le terminal informatique, et configuré pour surveiller en temps réel les interactions des utilisateurs avec une pluralité d'applications SaaS. Ce module de collecte de données (200) se compose de plusieurs sous-composants, en fonction de la nature des applications :
∘ Extensions navigateurs (210) : Ces extensions, installées dans les navigateurs des utilisateurs, enregistrent les interactions comme les clics, les temps de session, les saisies de données, et d'autres comportements. Les extensions de navigateur surveillent et contrôlent les activités en ligne, en particulier l'accès aux applications SaaS, directement dans le navigateur.
∘ Un agent (220) constitué par une API de collecte des événements. Il s'agit d'un logiciel agent est installé sur chaque appareil de l'utilisateur, surveillant les activités en temps réel, y compris l'utilisation des applications SaaS. Les données capturées par les extensions sont transmises à une API centrale en temps réel, qui les agrège pour un traitement ultérieur.
∘ Un proxy (230) agit comme intermédiaire entre l'utilisateur et internet, interceptant et contrôlant le trafic web pour filtrer, analyser et bloquer l'accès à certaines ressources.
∘ Un navigateur d'entreprise sécurisé (en anglais "Enterprise Browser") (240) combinant les fonctionnalités classiques d'un navigateur web (comme Chrome, Edge ou Firefox) avec des outils avancés de sécurité, de gestion et de gouvernance adaptés aux besoins professionnels. Contrairement aux navigateurs traditionnels, les Enterprise Browsers intègrent nativement des mécanismes de contrôle et de protection des données pour les environnements de travail

### 2. Base de connaissances SaaS

Ce composant (200) est responsable de maintenir une taxonomie commune des applications SaaS, afin de faciliter la gestion et l'analyse des solutions déployées dans l'entreprise. Cette base de données (300) contient des informations détaillées sur plus de 40.000 SaaS :
- Catalogue des applications, de type « ID (identifiant de l'application) I URL | nom de l'application I domaine fonctionnel I statut (autorisé ou interdit) I Message à envoyer (pour les applications interdites) I ID de l'application cible de substitution (pour les applications interdites)». Ce catalogue complet des applications avec des métadonnées (éditeur, catégorie, niveau de sécurité, conformité, etc.) permet de comparer et de filtrer les solutions selon les besoins de l'entreprise.
   o Identification des redondances et des usages : Ce sous-composant analyse les données collectées et identifie les applications redondantes ou sous-utilisées dans le parc logiciel de l'entreprise. Cela permet aux responsables de rationaliser les outils utilisés.

### 3. un lac de données et un moteur d'analyse de données.

Le lac de données stocke toutes les données générées par les utilisateurs et les applications SaaS observées. Il constitue le socle central pour l'analyse des usages :
o Stockage des données utilisateurs et SaaS : Toutes les données collectées par le module de tracking (sessions, clics, etc.) et les informations sur les applications sont stockées dans un Data Lake à haute capacité et évolutif.
o Moteur d'analyse de données : Ce moteur permet de traiter des volumes importants de données en effectuant des analyses comportementales. Il utilise des techniques de machine learning et d'analytique avancée pour détecter des patterns d'utilisation, des tendances, et des risques potentiels (e.g., applications SaaS non conformes aux standards de sécurité).
o Comparaison inter-entreprises : la comparaison de l'usage des SaaS entre des millions d'utilisateurs et des milliers d'applications à travers différents secteurs permet de fournir des benchmarks aux entreprises pour évaluer leur efficacité.

### 4. Module de sécurité et de conformité

Ce module garantit que les applications SaaS utilisées respectent les normes de sécurité et de conformité internes à l'entreprise et aux régulations externes (e.g., RGPD):
∘ Vérification des conformités SaaS :
∘ Le module analyse chaque application pour vérifier si elle est conforme aux politiques internes et aux normes réglementaires (par exemple, sécurité des données, chiffrement, gestion des accès).
∘ Détection des comportements à risque : Les utilisateurs peuvent être surveillés en temps réel pour détecter des comportements inhabituels, tels que l'utilisation d'applications non autorisées ou le partage de données sensibles. Ce composant déclenche des alertes lorsque des risques sont détectés.

### 5. Système de notification et d'interaction utilisateur (Real-Time Engagement) :

Ce système est responsable de l'envoi de notifications ou de messages contextuels aux utilisateurs afin d'améliorer l'adoption des outils et d'assurer la conformité des usages :
o Envoi de messages personnalisés : Le système identifie le moment idéal pour envoyer des notifications (en temps réel, après une certaine période d'inactivité, etc.) et aux bons utilisateurs (par exemple, des utilisateurs expérimentés ou novices)
o Guidage en temps réel : Des recommandations peuvent être envoyées aux utilisateurs pour améliorer leur productivité, les aider à utiliser efficacement les outils, ou les avertir lorsqu'un comportement suspect est détecté.

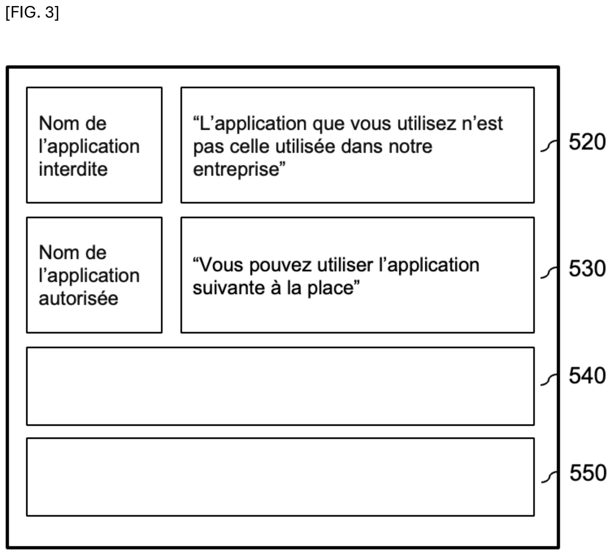

Les messages numériques (500) présentent une structure illustrée par la figure [FIG. 3].

Ils comprennent une fenêtre de notification (510), le nom de l'application interdite (501) associé à un message textuel (502) par exemple « "L'application que vous utilisez n'est pas celle utilisée dans notre entreprise", le nom de l'application de substitution (503), associé à un message textuel (504) par exemple « Vous pouvez utiliser l'application suivante à la place".

Ces messages (500) comprennent des champs d'observation en temps réel d'une anomalie (510), un bouton (540) de redirection vers l'application autorisée et un texte d'explication (550) pour sensibiliser les employés sur les politiques de l'entreprise

### 6. Module de gouvernance et de rapports (en anglais « reporting ») :

Ce module fournit les outils pour la gestion stratégique des applications SaaS à travers les différents départements de l'entreprise (IT, achats, finance, métiers). Il centralise la gouvernance et facilite la prise de décision :
∘ Intégration de données complémentaires
   ∘ Données organisationnelles (Active Directory)
   ∘ "Business Capability Map" des entreprises qui viennent d'outils d'architecture comme LeanIX
   ∘ Données de sécurité (e.g., volume d'upload, de download sur une application) qui viennent d'outil de Sécurité comme Zscaler
∘ Gestion des licences et des coûts : Le module suit les dépenses liées aux licences SaaS et identifie les opportunités de réduction de coûts en éliminant les applications redondantes ou inutilisées.
∘ Alignement avec les objectifs métier : Il permet de garantir que les applications SaaS utilisées répondent aux objectifs stratégiques de l'entreprise en matière de transformation numérique, innovation, et optimisation des coûts.
∘ Tableaux de bord : Les décideurs ont accès à des tableaux de bord dynamiques qui regroupent des données clés sur l'utilisation des applications SaaS, la conformité, la sécurité, et les performances utilisateurs. Ces outils facilitent la prise de décision et la collaboration entre les départements (IT, métiers, achats, finance).

L'architecture fonctionnelle est divisée en plusieurs modules qui interagissent pour collecter, analyser, sécuriser, et gérer les applications SaaS d'une entreprise. Elle repose sur une intégration fluide entre les différents départements de l'entreprise et offre une gestion centralisée des données et de la gouvernance tout en garantissant la sécurité et la conformité.

### Description détaillée du module de collecte

Le module de collecte des données utilisateur joue un rôle essentiel dans l'architecture de la solution, car il capture, traite et transmet les interactions des utilisateurs avec les applications SaaS, en temps réel. Ce module est conçu pour offrir une visibilité fine sur l'utilisation des outils SaaS dans une entreprise, et il est conçu pour être léger, sécurisé et évolutif.

Le module de collecte des données se compose de plusieurs sous-composants fonctionnels interconnectés qui assurent la surveillance en temps réel des activités des utilisateurs dans les applications SaaS via les navigateurs ou autres interfaces :
a) Extension Navigateur : L'extension navigateur est installée sur les ordinateurs des utilisateurs et fonctionne comme un agent local qui collecte les informations sur l'utilisation des applications SaaS accessibles via le navigateur. Développée par exemple en JavaScript, cette extension fonctionne de manière indépendante du système d'exploitation, ce qui permet une compatibilité avec les principaux navigateurs (Chrome, Firefox, Edge, etc.). Les fonctionnalités principales sont les suivantes :
   ∘ Capture des événements utilisateur : L'extension surveille les interactions comme les clics, la saisie de texte, la durée des sessions, la page visitée (e.g., taille du footer, nombre de liens dans le footer, présence de boutons login/logout, champ lexical sur les connections, l'action de connexion via URL de connexion)
   ∘ Suivi des sessions : Elle identifie les sessions utilisateur en associant un identifiant unique aux utilisateurs et en suivant leur activité pendant toute la durée d'utilisation de l'application.
   o Mécanisme d'envoi de données : Les événements collectés sont transmis à une API backend en temps réel via des requêtes HTTP sécurisées.
b) Une API de collecte des événements est responsable de la réception des données envoyées par les extensions et de leur prétraitement avant de les stocker ou les envoyer pour analyse. Elle est par exemple construite en utilisant des technologies web robustes comme Node.js ou Python (Flask/Django) pour gérer efficacement les requêtes à haute fréquence. Ces fonctionnalités principales sont les suivantes :
   ∘ Réception des données : Les données sont envoyées en paquets JSON ou par WebSockets, et l'API s'assure de leur bonne réception.
   ∘ Validation des données : L'API effectue une première validation des données pour vérifier la conformité des formats, la validité des sessions utilisateur, et l'intégrité des données transmises.
   ∘ Normalisation des événements : Avant de passer au traitement, les événements sont normalisés pour faciliter leur analyse. Par exemple, les clics ou saisies sont traduits en actions pré-formatées exploitables par les moteurs d'analyse en aval.
   ∘ Transmission sécurisée : Toutes les communications entre les extensions et l'API sont chiffrées via des protocoles sécurisés comme TLS/SSL pour garantir la confidentialité des données.
c) Un système de gestion des sessions utilisateur permet d'identifier et de suivre les actions des utilisateurs au fil du temps en liant les événements collectés à des sessions utilisateur spécifiques. Ces fonctionnalités principales sont les suivantes :
   o Gestion des identifiants utilisateur : Lorsqu'un utilisateur se connecte à une application SaaS, un identifiant unique lui est attribué, qui permet de suivre ses interactions au fil du temps sans révéler son identité personnelle.
   o Analyse des sessions : Les sessions sont analysées pour identifier les durées d'utilisation, les pauses, les reprises d'activité, etc.
   o Reconnaissance multi-appareils : Si un utilisateur accède aux applications SaaS depuis différents appareils, le système peut fusionner les événements associés pour une vision complète.
d) Un système de file d'attente et traitement des événements assure une collecte fluide et performante des événements utilisateur et empêche la surcharge des serveurs en répartissant la charge. Des systèmes de message queue comme Apache Kafka ou RabbitMQ peuvent être utilisés pour gérer les flux d'événements entrants. Les fonctionnalités sont les suivantes :
   o Mise en file d'attente des événements : Les événements collectés via l'API sont placés dans une file d'attente avant d'être envoyés au moteur d'analyse. Cela permet de gérer les pics de trafic sans affecter les performances.
   o Traitement asynchrone : Les événements sont traités de manière asynchrone, ce qui signifie qu'ils peuvent être enregistrés et analysés en temps différé sans perturber l'expérience utilisateur.
e) Le lac de données et le moteur d'analyse en temps réel ont pour objectif de stocker et analyser les événements collectés pour en tirer des insights sur l'utilisation des applications SaaS. Le lac de données repose souvent sur des systèmes de stockage comme Amazon S3, Azure Blob Storage, ou Google Cloud Storage, tandis que l'analyse en temps réel peut être effectuée via des outils comme Apache Spark ou Flink.
   Chaque événement utilisateur est enregistré dans le lac de données, permettant des analyses historiques et comparatives. Le moteur d'analyse comportementale effectue des analyses en temps réel pour identifier des patterns spécifiques (par exemple, sessions longues, utilisateurs inactifs, utilisateurs expérimentés). Les données sont scrutées pour repérer des comportements inhabituels ou à risque, comme l'accès non autorisé à certaines applications SaaS.

La présentation qui précède concerne la gestion d'applications exécutées dans le cloud (SaaS, ou logiciel interne) sur les ordinateurs des utilisateurs. Pour d'autres applications de type clients lourd installés sur le terminal de travail, la collecte de ces données serait réalisée par un agent installé sur le terminal de travail des collaborateurs. Pour des utilisations sur les mobiles ou tablettes des utilisateurs, la collecte de ces données serait réalisée par les fonctionnalités native de OS (Cette fonctionnalité permet de mesurer le temps consacré à chaque application installée sur le mobile et aux sites Web visités via le navigateur principal).

### Flux de Données et Fonctionnement

Le fonctionnement du module de collecte des données peut être décomposé en plusieurs étapes, de l'interaction utilisateur à l'analyse des données :
Étape 1 : Surveillance et Capture des Événements. L'utilisateur interagit avec une application SaaS via son navigateur. L'extension capture des événements tels que des clics, des mouvements de souris, des saisies de données, des changements de page, des erreurs, etc.
Étape 2 : Transmission des Données. Les événements collectés sont immédiatement transmis via des appels HTTP POST ou WebSocket à l'API de collecte, qui les reçoit, les valide, et les structure pour une utilisation ultérieure.
Étape 3 : Gestion des Sessions et Prétraitement. L'API associe chaque événement à une session utilisateur unique, en validant que l'utilisateur est bien autorisé à accéder à cette application SaaS et en appliquant des règles de sécurité pour garantir que les événements sont corrects et non manipulés.
Étape 4 : Mise en file d'attente des Événements. Les événements validés sont placés dans une file d'attente gérée par un système de message queue (Kafka ou RabbitMQ). Cela permet de répartir les événements entre plusieurs processus de traitement et d'éviter les surcharges.
Étape 5 : Stockage et Analyse. Une fois prétraités, les événements sont envoyés vers le lac de données pour stockage à long terme. Simultanément, les événements en temps réel sont analysés par des algorithmes pour détecter des schémas de comportement utilisateur ou des anomalies de sécurité.
Étape 6 : Rétroaction et Notification. Si un comportement anormal ou une inefficacité est détectée (par exemple, un utilisateur ne parvient pas à utiliser une application de manière optimale), le système peut déclencher une notification en temps réel à l'utilisateur ou à l'administrateur pour corriger le problème.

### Base de connaissances SaaS

La Base de connaissances SaaS est un composant clé qui permet de centraliser, structurer et organiser des informations sur des milliers d'applications SaaS utilisées dans une entreprise. Cette base de données est essentielle pour permettre une gestion efficace des applications, en facilitant l'identification des redondances, la conformité aux standards, et l'optimisation de l'usage des applications. Le but de cette base est de fournir une taxonomie complète et structurée des applications SaaS, incluant des métadonnées sur chaque application (éditeur, type, sécurité, conformité, usage, etc.), afin de permettre aux entreprises de mieux gérer leur écosystème logiciel.

L'architecture est construite autour de plusieurs couches et composants logiques, chacun ayant un rôle spécifique dans l'organisation, la collecte, le stockage, et l'exploitation des données sur les applications SaaS.

La base de connaissances repose sur une taxonomie hiérarchique qui classe les applications SaaS selon plusieurs critères. Cette taxonomie permet de regrouper les applications par catégories, d'en comprendre les redondances, et d'évaluer leur pertinence.
- Catégories de base : Type d'application (collaboration, finance, marketing, etc.).
- Niveaux de sécurité : Classement des applications selon leur niveau de sécurité (chiffrement, authentification, conformité à des normes).
- Compatibilité avec les standards : Évaluation de la conformité des applications aux standards réglementaires (RGPD, SOC 2, ISO 27001, etc.).

Chaque application est décrite par une série d'attributs, qui vont au-delà de la simple classification et permettent une évaluation plus fine.
o Nom de l'application et éditeur.
o Type de licence (gratuite, freemium, payante).
o Sécurité (type d'authentification, chiffrement, respect des standards de sécurité).
o Conformité légale (e.g., RGPD, HIPAA).
o Compatibilité avec d'autres systèmes (intégrations API, connecteurs).
o Popularité ou usage dans l'entreprise (nombre d'utilisateurs, fréquence d'utilisation).
o Redondance : Identification des fonctionnalités similaires avec d'autres applications SaaS.

Les informations sur les applications SaaS proviennent de plusieurs sources :
o Intégrations directes : L'API se connecte directement aux services SaaS pour collecter des métadonnées.
o Contributions utilisateurs : Les administrateurs et les équipes IT peuvent enrichir la base avec des données spécifiques à leur entreprise ou des expériences propres sur l'utilisation des applications.
o Fournisseurs tiers : intégration des services externes qui fournissent des informations sur les standards de sécurité ou la conformité légale des applications (par exemple, des sources comme TrustArc^{™} ou SecurityScorecard^{™}).
o Processus d'enrichissement automatique pour augmenter les informations collectées avec des données externes, comme les avis utilisateurs, les mises à jour de sécurité, ou les changements de politique de confidentialité.

Une fois les informations collectées, elles sont indexées dans la base de connaissances pour permettre une recherche rapide et efficace. Chaque application est associée à un ou plusieurs index en fonction de ses caractéristiques (type, éditeur, conformité, etc.). Le moteur de recherche de la base de connaissances permet aux utilisateurs de filtrer et rechercher des applications en fonction de critères précis (type d'application, conformité, etc.). Il repose sur des algorithmes de recherche full-text et de recherche sémantique.

Chaque application est notée en fonction de critères spécifiques comme la sécurité, la conformité, l'usage dans l'entreprise, ou les retours d'expérience des utilisateurs via un algorithme de notation (en anglais « scoring ») pour classer les applications et aider les entreprises à choisir les plus appropriées.
o Note basée sur les pratiques de sécurité (chiffrement, gestion des identités, etc.).
o Note basée sur le respect des normes réglementaires.
o Évaluation de la facilité d'adoption par les utilisateurs internes à l'entreprise.

L'invention permet aux administrateurs de comparer les applications similaires pour identifier les doublons, les solutions les plus performantes ou celles répondant mieux aux exigences de sécurité et de conformité.

La base de connaissances SaaS s'appuie sur une base de données relationnelle pour stocker les informations bien structurées, comme les métadonnées des applications, les relations entre les catégories et les standards de sécurité. Des technologies comme PostgreSQL ou MySQL peuvent être utilisées.
o Tables et relations : La base de données relationnelle est organisée en tables (applications, éditeurs, catégories, etc.) reliées entre elles par des clés étrangères pour garantir la cohérence des informations.
o Base NoSQL (MongoDB, Cassandra) : Une base NoSQL peut être utilisée en complément pour stocker des données moins structurées comme des logs d'événements d'utilisation, des retours d'expérience des utilisateurs, ou des évaluations basées sur les comportements réels.
o Stockage des logs d'utilisation : Permet de garder une trace des changements d'état, de l'usage dans le temps, ou des mises à jour des applications SaaS.

La base de connaissances est régulièrement mise à jour pour inclure les nouvelles applications SaaS, les mises à jour de sécurité, ou les changements dans les politiques de conformité. Ces mises à jour peuvent provenir des éditeurs eux-mêmes via des APIs ou des flux d'informations. Les entreprises clientes peuvent synchroniser la base de connaissances avec leurs propres bases de données SaaS internes pour aligner les informations sur les standards et l'usage réel dans l'entreprise.

La base de connaissances est accessible via un portail web où les administrateurs peuvent consulter, rechercher, et analyser les informations sur les applications SaaS. Ce portail est construit avec des cadres (en anglais « frameworks web ») modernes comme React^{™} ou Angular^{™}.

### Moteur d'analyse de données : Architecture et Fonctionnement

Le Moteur d'analyse de données est responsable du traitement des données stockées dans le lac de données. Son rôle est d'exécuter des analyses à grande échelle, d'identifier des schémas de comportement utilisateur, de détecter des anomalies, et de générer des rapports exploitables pour les décideurs.

Le moteur d'analyse repose sur des technologies de traitement de données distribuées pour pouvoir traiter de grands volumes de données rapidement et efficacement. Le moteur d'analyse peut inclure des algorithmes d'apprentissage machine (en anglais « machine learning « via Spark MLlib^{™} pour détecter des patterns, comme les anomalies de sécurité ou les tendances d'utilisation des applications SaaS. Pour les analyses plus avancées, telles que la segmentation des utilisateurs ou la prédiction d'événements, des cadres d'apprentissage profond (en anglais « frameworks de deep learning »- peuvent être intégrés.

Le moteur d'analyse effectue plusieurs types d'analyses sur les données collectées dans le lac de données :
o Analyse comportementale : Analyse des interactions des utilisateurs avec les applications SaaS pour comprendre les modèles d'utilisation, comme la durée des sessions, les applications les plus fréquemment utilisées, ou les comportements déviants.
o Analyse comparative : comparaison de l'usage des applications SaaS d'une entreprise avec les benchmarks sectoriels ou avec d'autres entreprises similaires pour évaluer la performance et l'adoption des outils.
o Détection d'anomalies : Grâce à des techniques d'apprentissage automatique, le moteur d'analyse peut identifier des comportements anormaux ou à risque, comme l'utilisation d'applications non autorisées, des pics inhabituels de trafic, ou des violations de sécurité.
o Analyse de conformité et de sécurité : Le moteur analyse les applications SaaS en fonction des critères de sécurité et de conformité prédéfinis. Cela permet d'identifier les applications qui ne respectent pas les normes de sécurité de l'entreprise ou qui sont potentiellement vulnérables.

Le traitement des données suit plusieurs étapes clés :
o Ingestion des données : Les données provenant du lac de données sont ingérées par les pipelines de traitement, qui peuvent être exécutés de manière batch ou en temps réel selon les besoins.
o Nettoyage et transformation des données : Avant d'être analysées, les données sont nettoyées pour éliminer les erreurs ou les incohérences, et elles sont enrichies avec des informations supplémentaires provenant de sources externes (par exemple, mises à jour de conformité ou de sécurité).
o Analyse et calcul : Les algorithmes d'analyse sont exécutés sur les données nettoyées pour générer des insights exploitables. Cela peut inclure des analyses descriptives (tendances passées), des analyses prédictives (prévisions futures), ou des analyses prescriptives (recommandations d'action).

Résultats et visualisation : Les résultats des analyses sont stockés dans des bases de données intermédiaires (Data Warehouse ou bases NoSQL) et présentés aux utilisateurs via des tableaux de bord interactifs ou des rapports automatisés.

Pour orchestrer les tâches d'analyse et assurer un flux de traitement fluide, des outils de gestion de workflows peuvent être utilisés. Ces outils permettent d'automatiser les processus, de planifier des analyses récurrentes, et de surveiller les pipelines d'analyse en temps réel.

### Description d'un exemple de mise en œuvre

Lorsqu'un utilisateur accède à une application sur un terminal de travail (navigateur ou hors navigateur), l'extension, et/ou l'agent local, et/ou le proxy capturent les données d'utilisation. Les données sont ensuite envoyées à la base de connaissance qui identifie si l'application est conforme aux politiques de l'entreprise. En cas de non-conformité, le système déclenche une notification contextuelle proposant une alternative autorisée.

Simultanément, le moteur d'analyse traite les données collectées pour identifier les applications redondantes, calculer les métriques d'utilisation et détecter des comportements anormaux. Si une application SaaS est sous-utilisée ou ne respecte pas les standards de sécurité, une alerte est envoyée aux administrateurs, qui peuvent alors ajuster les licences et les configurations pour optimiser les ressources. La description qui suit se référant aux dessins annexés concerne les éléments clés de l'invention pour une gestion centralisée, sécurisée et adaptable des applications SaaS, réduisant les risques de sécurité, les inefficacités d'utilisation, et les coûts associés à des licences sous-utilisées.

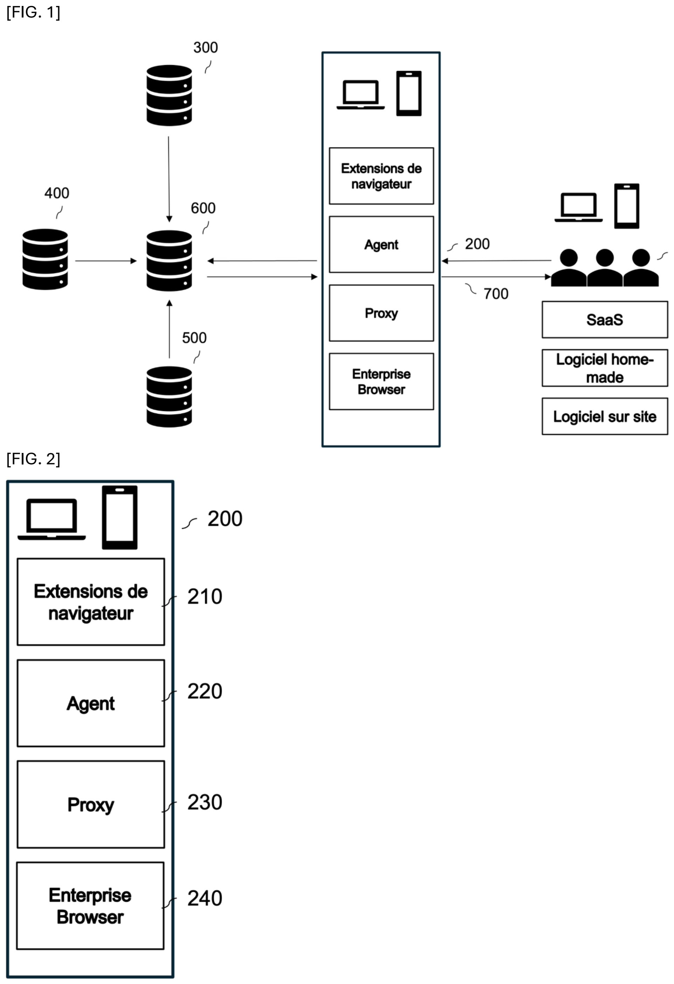

La figure [FIG. 1] décrit les composants clés et leur interaction pour garantir une gestion optimisée et sécurisée des applications SaaS, ainsi que le respect des politiques de l'entreprise.

Le premier composant clé est le module de collecte de données (200) installé sur le terminal informatique (100) de chacun des utilisateurs. Ce module de collecte de données (200) comprend un composant logiciel d'extension de navigateur (210). Des extensions (210) sont installées sur les navigateurs (100) des utilisateurs pour surveiller les activités en ligne, en particulier l'accès aux applications SaaS. Ces extensions (210) enregistrent des événements utilisateur comme les métriques des clics (position du pointeur, horodatage, durée...), la durée de session, et les interactions spécifiques avec chaque application.

Alternativement, le module de collecte de données (200) peut être réalisé par un agent logiciel (220) installé localement sur chaque terminal de travail (100) pour capter en temps réel les interactions utilisateur et compiler les données sur l'utilisation des applications SaaS.

Une autre alternative de réalisation du module de collecte de données (200) consiste à utiliser un proxy intermédiaire (230) pour filtrer et analyser le trafic web pour identifier les applications accédées. Il bloque l'accès aux applications non conformes ou d'appliquer des restrictions d'accès selon les politiques définies.

Un deuxième composant clé de l'invention est la base de connaissance des Applications (300). Cette base de connaissance (300) regroupe toutes les applications SaaS connues de l'entreprise, segmentées par domaines fonctionnels (comme visioconférence, gestion de projet, partage de fichiers). Elle permet d'identifier et de classer les applications standards, interdites, et tolérées par domaine fonctionnel.

Chaque application est associée à des métadonnées, y compris l'URL, la politique d'utilisation et les préférences de notification, permettant au système de comparer l'utilisation en temps réel avec les standards de l'entreprise.

Le troisième composant clé de l'invention est un enregistrement numérique des politiques d'entreprise pour les applications (400), associant à chaque application des indicateurs numériques permettant de déterminer les applications qui sont standards, tolérées, ou interdites. Par exemple, si une application de visioconférence est standard, elle sera privilégiée, tandis que d'autres seront tolérées ou bloquées en fonction des besoins de l'entreprise.

Le quatrième composant clé de l'invention est le système de paramétrage des notifications (500). Ce système de paramétrage des notifications (500) est intégré pour envoyer des messages contextuels en fonction de l'utilisation des applications SaaS. Si un utilisateur accède à une application non autorisée, une notification est déclenchée, redirigeant l'utilisateur vers une application standard.

La notification peut être configurée pour apparaître après une certaine durée d'utilisation ou lorsqu'un comportement anormal est détecté. Elle comprend des options de redirection, un message expliquant les raisons de la restriction, et un lien vers l'application conforme.

Le cinquième composant clé de l'invention est le moteur d'analyse des données (600) qui centralise les données collectées pour suivre les comportements d'utilisation des applications. En s'appuyant sur des algorithmes de détection, le moteur identifie les applications redondantes, les sous-utilisations, et les anomalies de sécurité. Il compare également les données d'utilisation avec les benchmarks internes et externes pour optimiser la configuration SaaS de l'entreprise.

Le sixième composant clé de l'invention est le module de notifications en Temps Réel (700). En fonction des résultats de l'analyse, le système envoie des notifications en temps réel aux utilisateurs ou aux administrateurs. Par exemple, si un utilisateur utilise une application interdite, une fenêtre contextuelle lui rappelle la politique d'entreprise et propose une redirection vers une application standard.

Les notifications sont personnalisables et incluent des messages clairs pour orienter les utilisateurs dans le respect des politiques de l'entreprise. Ces notifications apparaissent dans le navigateur ou sur le terminal de travail selon les besoins.

### Contribution technique de l'invention

L'invention vise à automatiser en temps réelle et en continu la gouvernance et l'adoption des applications SaaS en capturant en temps réel des données d'utilisation des applications, en identifiant les redondances et en détectant les anomalies, l'invention optimise l'utilisation des ressources informatiques et améliore la sécurité du système. Ce traitement permet une répartition plus efficace de la charge de travail et une protection proactive contre des comportements déviants, produisant ainsi un effet technique supplémentaire en termes de sécurité et de performance.

Les modules techniques prévus dans la mise en œuvre du procédé, tels que les extensions de navigateur, l'API de collecte, le moteur d'analyse et les serveurs de notification en temps réel, jouent un rôle technique crucial. Ces éléments, intégrés dans l'architecture de gestion, sont directement responsables de la collecte et de l'analyse en temps réel des interactions des utilisateurs, permettant de détecter des schémas d'utilisation qui seraient impossibles à identifier sans un dispositif automatisé. Elles permettent de fournir un système de gestion centralisée et automatisée des applications SaaS, avec des réponses proactives aux incidents de sécurité. Le procédé objet de l'invention répond à plusieurs problèmes techniques spécifiques, notamment la surcharge des ressources informatiques due aux applications redondantes, le manque de visibilité sur les utilisations réelles des SaaS, et les risques de sécurité liés à l'utilisation d'applications non validées. En apportant une solution intégrée qui surveille, analyse et optimise l'usage des SaaS en temps réel, l'invention apporte une réponse technique efficace à des problèmes d'exécution, de sécurité et de conformité, dépassant les capacités standard des logiciels SaaS.

Par ailleurs, l'architecture combinée incluant des modules de collecte de données, un moteur d'analyse avancé, et un système de notification - contribue à l'effet global en permettant une surveillance automatisée et une gestion optimisée des applications SaaS. Ces caractéristiques techniques ne se limitent pas à une simple exécution logicielle, mais forment un ensemble interconnecté qui produit un effet technique concret : un fonctionnement plus sûr et optimisé des ressources SaaS dans l'entreprise.

Par ailleurs, les étapes de l'invention (capturer en temps réel les données d'utilisation, analyser les données pour identifier des comportements déviants ou inefficaces, et notifier les utilisateurs en conséquence) apportent une solution technique spécifique aux défis de gestion des SaaS dans les environnements d'entreprise. Ces caractéristiques dépassent les méthodes de gestion SaaS classiques, ajoutant une capacité d'adaptation et d'optimisation des ressources qui n'est pas évidente à partir de l'état de la technique actuel.

## Revendications

1. - Procédé de gestion des logiciels utilisées sur une pluralité de terminaux informatiques (100) utilisés par une communauté d'utilisateurs appartenant à une entité appliquant des politiques de sécurité, chacun des terminaux informatiques comportant un moyen d'authentification de l'utilisateur (210, 220), **caractérisé en ce qu'**il comprend les étapes suivantes :
• Installation sur chacun desdits terminaux informatiques, d'un module de collecte de données (200) configuré pour surveiller en temps réel les interactions des utilisateurs avec une pluralité d'applications SaaS ;
• Enregistrement de références d'utilisation desdites applications dans une base de connaissances (300) ;
• Collecte de données comprenant la capture de données d'utilisation des applications, comportant l'identification des applications utilisées ;
• Analyse desdites données collectées via un moteur d'analyse de données (600) pour:
∘ Réaliser en temps réel l'identification des applications utilisées par chacun des utilisateurs,
∘ Détecter des anomalies par rapport aux références d'utilisation des applications,
• Génération de notifications en temps réel (700) selon les usages applicatifs, configuré pour envoyer des messages électroniques personnalisés auxdits terminaux informatiques des utilisateurs, ladite notification se déclenchant en cas de comportements anormaux ou pour optimiser l'utilisation des applications
• ladite notification commandant le masquage d'une partie de la zone d'affichage de l'interface graphique correspondant à l'application ayant occasionné ladite génération de notification.

2. - Procédé de gestion des applications selon la revendication 1, **caractérisé en ce que** lesdites données comprennent une partie au moins des événements constitués par des métriques de clics, des durées de sessions, des saisies de données et des interactions avec des fonctionnalités spécifiques des applications SaaS capturées par les extensions de navigateur (210) et l'agent logiciel (220).

3. - Procédé de gestion des logiciels en tant que service selon la revendication 1 **caractérisé en ce qu'**il comporte une étape préliminaire de configuration d'un lac de données pour stocker lesdites données collectées sur lesdits terminaux informatiques.

4. - Procédé de gestion des logiciels en tant que service selon la revendication précédente, **caractérisé en ce que** les données stockées dans ledit lac de données sont chiffrées au repos et en transit pour garantir la sécurité et la confidentialité des informations collectées.

5. - Procédé de gestion des logiciels en tant que service selon la revendication 1 **caractérisé en ce que** ledit module de collecte de données est une API.

6. - Procédé de gestion des logiciels en tant que service selon la revendication 1 **caractérisé en ce que** ladite étape d'analyse de données collectée est réalisé par un moteur d'analyse exécutant les traitements pour :
• réaliser des analyses comportementales sur l'utilisation des applications SaaS par les utilisateurs,
• identifier des applications redondantes ou sous-utilisées,
• détecter des anomalies dans l'utilisation des applications SaaS, et
• comparer les performances des applications SaaS à des benchmarks externes ;

7. - Procédé de gestion des logiciels en tant que service selon la revendication précédente, **caractérisé en ce que** ledit moteur d'analyse de données est configuré pour exécuter des algorithmes d'apprentissage automatique pour identifier des schémas d'utilisation, des comportements utilisateur inhabituels, ou des vulnérabilités dans les applications SaaS.

8. - Procédé de gestion des logiciels en tant que service selon la revendication 6, **caractérisé en ce que** ledit moteur d'analyse de données est configuré pour exécuter des analyses comparatives entre les performances d'applications SaaS similaires utilisées dans l'entreprise et dans d'autres organisations, afin de fournir des benchmarks sectoriels.

9. - Procédé de gestion des logiciels en tant que service selon la revendication 1 **caractérisée en ce que** lesdites données collectées sur lesdits terminaux informatiques sont enregistrées dans un lac de données.

10. - Procédé de gestion des logiciels en tant que service selon la revendication précédente, **caractérisé en ce que** ledit lac de données est configuré pour organiser les données en plusieurs zones, comprenant :
- une zone pour le stockage brut des données collectées,
- une zone pour le stockage des données après nettoyage et transformation,
- une zone pour le stockage des données prêtes à être analysées.

11. - Procédé de gestion des logiciels en tant que service selon la revendication 1 **caractérisé en ce que** ledit système de notification est configuré pour envoyer des notifications contextuelles en fonction de règles prédéfinies, telles que l'utilisation prolongée d'une application SaaS, une violation de politique de sécurité ou l'adoption insuffisante d'une nouvelle application.
